# NOUVEAU FASCICULE DE BREVET EUROPEEN

(11) **EP 1 138 555 B2**
(45) Date de publication et mention de la décision concernant l'opposition: **25.01.2017**
(45) Mention de la délivrance du brevet: 10.11.2004
(21) Numéro de dépôt: 01400782.7
(22) Date de dépôt: 27.03.2001
(51) Int. Cl.: B60R 16/02, H02G 11/00

(54) **Dispositif de support et de guidage d'un faisceau de fils électriquement conducteurs permettant de suivre les déplacements d'un siège avant de véhicule automobile**
Vorrichtung zum Tragen und Führen eines Bündels elektrischer Leiter, welche das Folgen von Bewegungen eines Vordersitzes eines Kraftfahrzeugs gestatten
Device for supporting and guiding a bundle of electrically conductive wires allowing to follow the displacements of a front seat of a motor vehicle

(30) Priorité: 28.03.2000 FR 0003907
(43) Date de publication de la demande: 04.10.2001
(73) Titulaire: Igus GmbH, 51147 Köln (DE)
(72) Inventeur: George, Vincent, 92350 Le Plessis Robinson (FR)
(74) Mandataire: Lippert, Stachow & Partner

(56) Documents cités:
- EP-A- 0 490 022
- EP-A- 0 724 101
- DE-A- 19 837 231
- FR-A- 2 750 265
- US-A- 5 292 178
- US-A- 6 011 318

## Description

La présente invention concerne un dispositif de support et de guidage d'un faisceau de fils électriquement conducteurs destiné en particulier à relier un équipement électrique solidaire de l'assise d'un siège avant d'un véhicule automobile à la batterie d'alimentation du véhicule de façon à suivre les déplacements, imposés par l'occupant, du siège relativement au plancher du véhicule.

Les sièges avant des véhicules automobiles actuels comportent de plus en plus des équipements nécessitant une alimentation électrique, tels que par exemple des moteurs électriques pour le réglage du siège à une position choisie par l'occupant, une nappe chauffante de l'assise du siège, un sac gonflable de sécurité, un témoin de non bouclage de la ceinture de sécurité, un chargeur de disques compacts audio, tous généralement solidaires de l'assise du siège en partie inférieure de celle-ci.

Le faisceau électrique reliant la batterie d'alimentation au siège chemine généralement au niveau du plancher sous la moquette posée sur celui-ci. Pour suivre les déplacements du siège, le faisceau reliant celui-ci au plancher comporte une portion déformable située sous le siège. Cette portion déformable a une forme généralement courbée et une longueur permettant les déplacements longitudinaux et/ou verticaux du siège.

Afin de limiter les risques d'accrochage du faisceau avec un élément voisin, tel que par exemple le pied d'un passager situé derrière le siège avant, la portion du faisceau en dessous du siège est généralement enrubannée pour former un cordon compact. Cependant, l'opération consistant à enrubanner par un ruban adhésif le faisceau reste imprécise et peu aisée.

En outre, l'orientation du faisceau sous le siège reste aléatoire car celui-ci, bien qu'étant enrubanné, peut se vriller ou se coincer lors du réglage de la position du siège.

Par ailleurs, les connecteurs utilisés pour relier le faisceau solidaire du siège au faisceau menant à la batterie du véhicule sont généralement des éléments rapportés au moment du montage ou sont déjà branchés à l'un des faisceaux à connecter, côté siège ou côté plancher. Ces connecteurs risquent donc de se débrancher et de se perdre avant le montage ou pendant celui-ci.

FR-A-2 750 265, qui représente l'état de la technique le plus proche, décrit un dispositif de guidage d'un faisceau électrique entre un élément fixe et un élément mobile d'un véhicule automobile. Ce dispositif est formé par une chaîne à maillons articulés, munie d'un canal médian de passage de faisceau électrique et d'organes en forme de U de verrouillage des maillons entre eux. Chaque maillon est formé par un corps de forme allongée comportant, à l'une de ses extrémités, une rotule reliée à ce corps par un étranglement et, à l'autre de ses extrémités, un logement débouchant destiné à recevoir la rotule du maillon suivant.

Ce dispositif connu est ainsi d'une réalisation extrêmement complexe et est par conséquent coûteux.

La présente invention a pour but d'éliminer les inconvénients ci-dessus des dispositifs connus de support d'un faisceau électrique.

Le document WO 98/40465 et le document US 3473769 présentent aussi des dispositifs de support et de guidage d'un faisceau déformable de fils électriquement conducteurs.

A cet effet, l'invention propose un dispositif de support et de guidage d'un faisceau déformable de fils électriquement conducteurs tel que défini dans la revendication 1.

Avantageusement, la bande flexible cambrée est réalisée en une matière plastique souple, telle que du polypropylène.

De préférence, les moyens de fixation du faisceau électrique dans la goulotte de la bande flexible comprennent des attaches formant crampons montées articulées à intervalles réguliers sur l'une des parois de la goulotte et fixées par encliquetage à leurs extrémités libres sur l'autre paroi latérale de la bande flexible.

Le dispositif comprend en outre un moyen de fixation permettant de fixer à la platine la partie d'extrémité du faisceau électrique située au voisinage de la zone de jonction entre la bande flexible et la platine.

Avantageusement, ce moyen de fixation est un collier de serrage.

La bande flexible comprend au moins un crochet ou agrafe permettant de fixer l'extrémité supérieure de la bande flexible par encliquetage de cette extrémité à la partie mobile.

La platine comprend des moyens de positionnement et de fixation au support et constitués notamment par une ou plusieurs barrettes de positionnement et un ou plusieurs pions de fixation aptes à s'engager à force dans des ouvertures de forme conjuguée du support.

La platine comprend en outre au moins un connecteur électrique fixé sur celle-ci et permettant le branchement des fils conducteurs du faisceau.

Avantageusement, le dispositif comprend des moyens d'espacement prévus sur la platine, permettant de former un espace entre la platine et le support pour recevoir dans celui-ci un ou plusieurs connecteurs électriques fixés sous la platine et permettant le branchement des fils conducteurs d'un faisceau électrique menant à la source d'alimentation.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective du dispositif de support et de guidage d'un faisceau électrique conforme à l'invention ;
- la figure 2 représente le dispositif de la figure 1 appliqué à un siège avant de véhicule automobile ; et

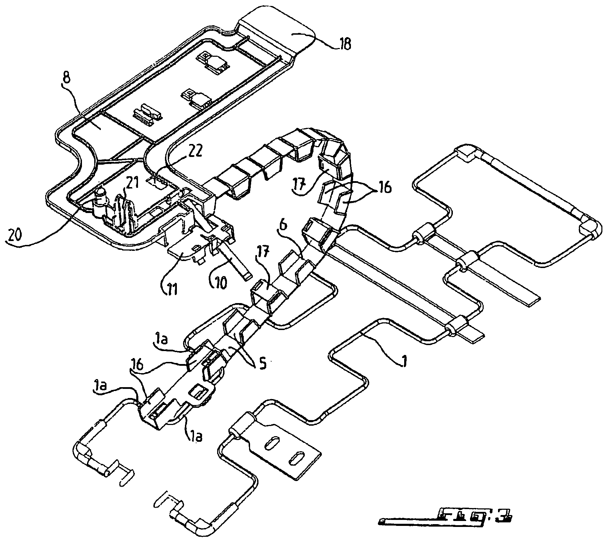

- la figure 3 est une vue en perspective de dessous suivant la flèche III du dispositif de la figure 2.

Le dispositif de support et de guidage d'un faisceau de fils électriquement conducteurs conforme à l'invention va être décrit en application à un siège avant de véhicule automobile.

En se reportant aux figures, la référence 1 désigne un élément d'armature de l'assise d'un siège avant (non représenté) de véhicule automobile et destiné à supporter l'occupant du siège.

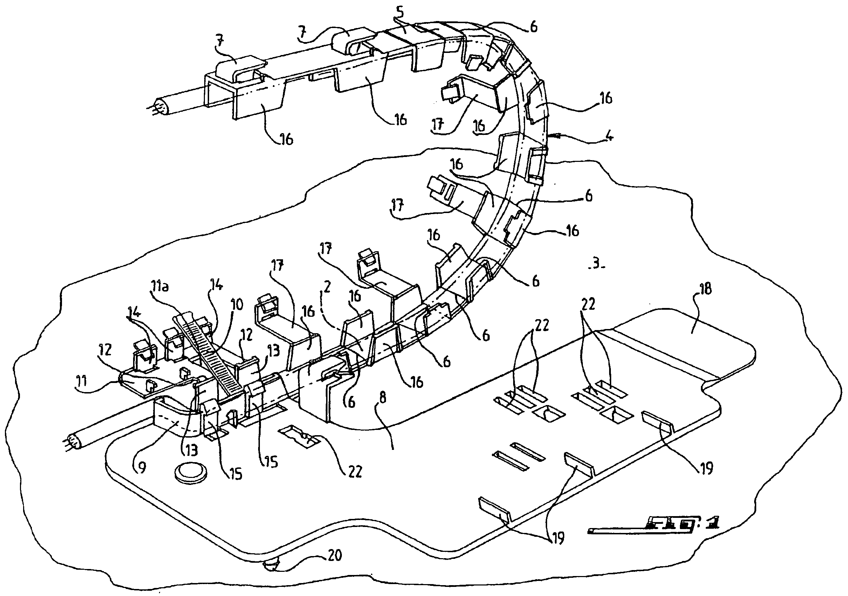

Le dispositif de l'invention est situé sous l'élément d'armature 1 et est agencé de façon à supporter et guider un faisceau déformable de fils électriquement conducteurs 2, visible en figure 1, pour permettre à ce faisceau de suivre les déplacements de l'élément d'armature 1 de l'assise tels qu'un déplacement longitudinal au véhicule en avant ou en arrière de celui-ci, un déplacement vertical relativement au plancher 3 du véhicule, voir même une légère rotation autour d'un axe vertical perpendiculaire à ce plancher.

Le faisceau électrique 2 est conçu pour relier électriquement un équipement solidaire de l'assise, par exemple de l'élément d'armature 1, tel que par exemple un moteur électrique permettant le réglage en position du siège, à la batterie du véhicule.

Ce dispositif comprend une bande flexible allongée et cambrée 4 située sous l'élément d'armature 1 en étant disposée dans un plan approximativement vertical au plancher 3 du véhicule.

La bande flexible 4 peut être réalisée en une matière plastique souple, telle que du polypropylène, et comprendre une pluralité d'éléments 5 liés les uns aux autres par des zones transversales de moindre épaisseur 6 constituant des charnières films de façon à permettre une déformation de la bande 4 vers l'avant ou l'arrière du véhicule et/ou vers le haut et le bas par rapport au plancher 3.

La bande flexible 4 s'apparente à une portion de chenille.

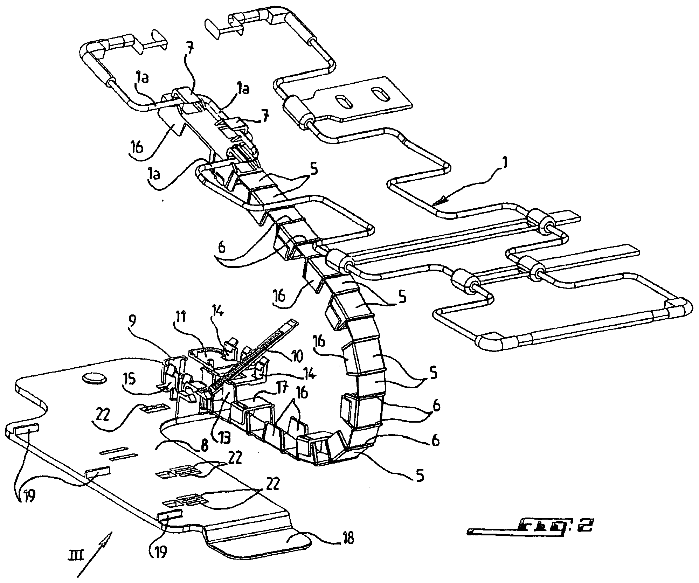

La bande flexible 4 a son extrémité supérieure fixée à l'élément d'armature 1 par au moins une partie repliée 7 solidaire de la face dorsale de bande 4 et formant crochet ou agrafe de fixation par encliquetage à une portion droite de tige la de l'élément d'armature 1. Comme représenté en figure 1, l'extrémité de la bande 4 comporte deux parties d'accrochage 7 situées en prolongement l'une de l'autre pour s'encliqueter respectivement sur deux parties droites parallèles de tige la comme représenté en figure 2. Cette dernière figure montre que l'extrémité de la bande 4 peut comporter une troisième partie d'accrochage 7 fixée par encliquetage à une portion de tige la raccordant les deux portions parallèles la perpendiculairement à celles-ci.

L'extrémité inférieure de la bande flexible 4 est solidaire d'une platine 8 fixée au plancher 3. A cet effet, la partie d'extrémité de la bande 4 fixée à la platine 8 comporte un boîtier 9 solidaire de la platine 8 et dans lequel est logé en partie le faisceau électrique 2 qui traverse le boîtier 9 en faisant saillie de celui-ci en formant avant sa sortie une déformation en chicane.

La partie du faisceau électrique 2 peut être fixée dans le boîtier 9 par un collier de serrage 10 en matière plastique souple et le boîtier est fermé par un couvercle 11 monté articulé à l'une des parois latérales du boîtier 9 par deux charnières films 12 venant de matière avec deux plaques verticales 13 du boîtier 9. Le couvercle 11 est verrouillé par des lames 14 solidaires de celui-ci et dont les extrémités sont configurées pour s'encliqueter respectivement sur des pieds de fixation 15 solidaires de la platine 8 perpendiculairement à celle-ci et adjacents à la paroi latérale du boîtier 9 opposée aux deux éléments de paroi 13. Le couvercle 11 comporte une ouverture 11a permettant le libre passage du collier de serrage 10 lorsque ce dernier maintient fermement la partie du faisceau 2 dans le boîtier 9 et que le couvercle 11 est rabattu en position verrouillée sur ce boîtier.

La bande flexible 4 est en forme de goulotte dans laquelle est fixé le faisceau électrique 2 qui est en contact intime avec la face interne de la bande 4 tout le long de celle-ci. Les parois latérales de la goulotte de logement du faisceau 2 sont constituées par de petites plaques 16 s'étendant à intervalles réguliers le long des deux bords de la bande 4 en faisant saillie radialement vers l'intérieur de celle-ci, c'est-à-dire de sa face interne par opposition à sa face dorsale comportant les parties d'accrochage 7.

Le faisceau électrique 2 est emprisonné et maintenu fermement dans la goulotte définie par les plaques transversales 16 par des attaches 17 formant crampons montées articulées à intervalles réguliers sur certaines des plaques transversales 16 situées d'un même côté de la bande flexible 4 et dont les extrémités libres sont conformées pour permettre la fixation par encliquetage des attaches 17 sur les plaques transversales en vis-à-vis 16 situées de l'autre côté de la bande 4. Chaque attache 17 peut être articulée à la plaque transversale correspondante 16 par une charnière film venant de matière avec la plaque 16. De la sorte, le faisceau électrique 2 est maintenu dans la goulotte de la bande 4 sans pouvoir sortir de celle-ci lors des déplacements longitudinaux et/ou verticaux de l'assise du siège.

La bande flexible 4 et les plaques transversales 16, les parties d'accrochage 7, les attaches 17 et le boîtier 9 peuvent être réalisés en une seule pièce par moulage d'une matière plastique. Cette matière souple de la bande 4 peut être légèrement vrillée pour autoriser une légère rotation du siège autour d'un axe vertical ou pour un rattrapage des jeux entre les différents éléments de positionnement du siège par rapport au plancher 3.

La platine 8 est pourvue de moyens de positionnement relativement au plancher 3 et comprenant une languette 18 de moindre épaisseur que la platine 8 située dans un plan en-dessous du plan de la platine pour s'engager sous la moquette du véhicule disposée sur le plancher 3, un ou plusieurs éléments de positionnement 19 en forme de barrette s'étendant verticalement au-dessus de la platine 8 pour se positionner sous la glissière du siège et un ou plusieurs pions de centrage 20 faisant saillie d'en-dessous de la platine 8 pour s'engager respectivement dans des ouvertures de forme conjuguée du plancher 3. La platine 8 comprend en outre des moyens de fixation au plancher 3 et constitués par un ou plusieurs pions striés 21 dits en sapin s'engageant à force élastiquement dans des ouvertures conjuguées du plancher 3.

La platine 8 peut comporter des moyens de fixation, tels que des ouvertures 22, aptes à recevoir un ou plusieurs connecteurs électriques montés sur la platine 8 pour le branchement des fils conducteurs du faisceau 2 sortant du boîtier 9. La platine 8 fixée au plancher 3 peut définir relativement à celui-ci un espace dans lequel des connecteurs peuvent être disposés sous la platine 8 et permettant de brancher les fils conducteurs d'un faisceau électrique (non représenté) menant à la batterie d'alimentation du véhicule. Cet espace peut être en forme de cuvette à section transversale arquée ou en U réalisée dans le plancher 3. L'interconnexion électrique du ou des connecteurs de branchement du faisceau 2 et du ou des connecteurs de branchement du faisceau menant à la batterie peut être assurée par des pistes conductrices gravées à la platine 8 ou noyées dans celle-ci.

Le montage du dispositif de support et de guidage de l'invention s'effectue comme suit. Tout d'abord, avant le montage du siège dans l'habitacle du véhicule, la bande flexible 4 est fixée par les moyens d'accrochage 7 à l'élément d'armature 1 de l'assise de ce siège. Ensuite, le faisceau électrique 2 est positionné dans la goulotte de logement de la bande 4 et les attaches 17 sont rabattues pour être verrouillées par encliquetage aux plaques transversales correspondantes 16 de la bande 4 pour emprisonner le faisceau 2 dans la goulotte. Le collier 10 est alors serré pour maintenir fermement la partie de faisceau 2 dans le boîtier 9 qui est une zone sujette à des efforts importants et susceptibles de sortir le faisceau de son logement. Les connecteurs électriques sont alors montés sur la platine 8 et les fils conducteurs du faisceau 2 solidaires de la bande souple 4 sont reliés aux entrées correspondantes de ces connecteurs. Le siège est ensuite monté dans le véhicule, en position basculée vers l'avant en appui sur une partie avant de l'assise et les fils conducteurs du faisceau menant à la batterie sont reliés aux entrées correspondantes des connecteurs fixés sous la platine 8 qui est alors positionnée sur le plancher 3 et fixée à celui-ci.

Le dispositif conforme à l'invention est conformé de façon à supporter, maintenir et protéger la portion du faisceau à fils électriquement conducteurs située sous le siège et guider cette portion de faisceau lors des déplacements longitudinaux et/ou verticaux du siège. Ce dispositif supporte en outre les connecteurs permettant de relier le faisceau électrique solidaire du siège au faisceau électrique menant à la batterie.

## Revendications

1. Dispositif de support et de guidage d'un faisceau déformable de fils électriquement conducteurs (2) permettant de relier une batterie d'alimentation d'un véhicule automobile à un équipement alimenté par la batterie d'alimentation et solidaire d'une partie mobile, qui est l'assise d'un siège avant de véhicule automobile, relativement à un support (3), qui est le plancher du véhicule, le dispositif de suport comprenant une bande flexible cambrée (4) ayant la forme d'une goulotte pour le logement du faisceau de fils, située sous la partie mobile (1) dans un plan approximativement vertical au support (3) et ayant son extrémité inférieure solidaire d'une platine (8) apte à être fixée au support (3) et son extrémité supérieure comprend un moyen (7) permettant de la fixer à la partie mobile (1) et comprenant des moyens de fixation (17) permettant d'emprisonner le faisceau (2) dans la goulotte en contact intime à la face interne de la bande flexible cambrée (4), de façon à permettre au faisceau (2) de suivre les déformations de la bande flexible cambrée (4) résultant des déplacements de la partie mobile (1) au moins dans deux directions orthogonales respectivement perpendiculaires au support (3) et parallèle à celui-ci, la bande flexible cambrée (4) comprenant une pluralité d'éléments (5) liés les uns aux autres par des zones transversales de moindre épaisseur (6) constituant des charnières films **caractérisé en ce que** la goulotte a ses parois latérales définies par de petites plaques (16) transversales respectivement aux bords de la bande flexible (4) en s'étendant à intervalles réguliers le long des deux bords de la bande flexible (4) en faisant saillie radialement vers l'intérieur de celle-ci.

2. Dispositif selon la revendication 1, **caractérisé en ce que** la bande flexible cambrée (4) est réalisée en une matière plastique souple, telle que du polypropylène.

3. Dispositif selon l'une des revendications précédentes, **caractérisé en ce que** les moyens de fixation (17) comprennent des attaches formant crampons montées articulées à Intervalles réguliers sur l'une des parois de la goulotte de la bande flexible (4) et fixées par encliquetage à leurs extrémités libres sur l'autre paroi latérale de la bande flexible (4).

4. Dispositif selon l'une des revendications précédentes, **caractérisé en ce qu'**il comprend un moyen de fixation (10) permettant de fixer à la platine (8) la partie d'extrémité du faisceau (2) située au voisinage de la zone de jonction (9) entre la bande flexible (4) et la platine (8).

5. Dispositif selon la revendication 4 **caractérisé en ce que** ledit moyen de fixation (10) est un collier de serrage.

6. Dispositif selon l'une des revendications précédentes, **caractérisé en ce que** ledit moyen (7) comprend au moins un crochet ou agrafe permettant de fixer l'extrémité supérieure de la bande flexible (4) par encliquetage de cette extrémité à la partie mobile (1).

7. Dispositif selon l'une des revendications précédentes, **caractérisé en ce que** la platine (8) comprend des moyens de positionnement et de fixation au support (3) et constitués notamment par une ou plusieurs barrettes de positionnement (19) et un ou plusieurs pions de fixation (21) aptes à s'engager à force dans des ouvertures de forme conjuguée du support (3).

8. Dispositif selon l'une des revendications précédentes, **caractérisé en ce que** la platine (8) comprend au moins un connecteur électrique fixé sur celle-ci et permettant le branchement des fils conducteurs du faisceau (2).

9. Dispositif selon l'une des revendications précédentes, **caractérisé en ce qu'**il comprend des moyens d'espacement prévus sur la platine (8), permettant de former un espace entre la platine (8) et le support (3) pour recevoir dans celui-ci un ou plusieurs connecteurs électriques fixés sous la platine (8) et permettant le branchement des fils conducteurs d'un faisceau électrique menant à la source d'alimentation.

## Patentansprüche

1. Vorrichtung zum Tragen und Führen eines verformbaren Bündels elektrisch leitender Drähte (2), welche das Verbinden einer Versorgungsbatterie eines Kraftfahrzeuges mit einer Einrichtung gestatten, die von der Versorgungsbatterie gespeist wird und fest mit einem-Teil, nämlich dem, Sitzteil eines Vordersitze für Kraftfahrzeuge, verbunden wird, das gegenüber einem Träger (3), nämlich dem Fahrzeugboden, beweglich ist, wobei die Vorrichtung zum Tragen ein biegsames, gekrümmtes Band (4) in Form einer Rinne zum Aufnehmen des Drahtbündels enthält, das sich unter dem beweglichen Teil (1) in einer annährend senkrecht zum Träger verlaufenden Ebene befindet und mit seinem unteren Ende fest mit einer Tragplatte (8) verbunden ist, die am Träger (3) befestigbar ist, und an seinem oberen Ende ein Mittel (7) enthält, mit dem es am beweglichen Teil (1) befestigt werden kann, und Befestigungsmittel (17) enthält, die es ermöglichen, das Bündel (2) in engem Kontakt mit der Innenseite des biegsamen, gekrümmten Bandes (4) in der Rinne einzuschließen, so dass es dem Bündel (2) möglich ist, den Verformungen des biegsamen, gekrümmten Bandes (4) zu folgen, die sich aus Verlagerungen des beweglichen Teils (1) in zumindest zwei orthogonalen Richtungen ergeben, die senkrecht zum Träger (3) bzw. parallel zu diesem verlaufen, wobei das biegsame, gekrümmt Band (4) eine Mehrzahl von Elementen (5) enthält, die über Querbereiche (6) geringerer Dicke miteinander verbunden sind, welche Filmscharniere bilden, **dadurch gekennzeichnet, dass** die Rinne an ihren Seitenwänden von kleinen Querplatten (16) an den jeweiligen Rändern des biegsamen Bandes (4) bestimmt ist, die sich in gleichmäßigen Abständen entlang der beiden Ränder des flexiblen Bandes (4) erstrecken und radial in das Innere desselben vorstehen.

2. Vorrichtung nach Anspruch 1, **dadurch gekennzeichnet, dass** das biegsame, gekrümmte Band (4) aus nachgiebigem Kunststoff hergestellt ist, wie etwa Polypropylen.

3. Vorrichtung nach einem der vorangehenden Ansprüche, **dadurch gekennzeichnet, dass** die Befestigungsmittel (17) klammerartige Verbindungsklemmen enthalten, die in gleichmäßige Abständen an der einen Rinnenwand des biegsamen Bandes (4) angelenkt und mit ihren freien Enden an der anderen Seitenwand des biegsamen Bandes (4) durch Einschnappen befestigt sind.

4. Vorrichtung nach einem der vorangehenden Anspräche, **dadurch gekennzeichnet, dass** sie ein Befestigungsmittel (10) enthält, über das der zu dem Verbindungsbereich (9) zwischen biegsamem Band (4) und Tragplatte (8) benachbarte Endabschnitt des Bündels (2) an der Tragplatte (8) befestigt werden kann.

5. Vorrichtung nach Anspruch 4, **dadurch gekennzeichnet, dass** das Befestigungsmittel (10) eine Klemmbandschelle ist.

6. Vorrichtung nach einem der vorangehenden Ansprüche, **dadurch gekennzeichnet, dass** das Mittel (7) zumindest einen Haken bzw. Bügel enthält, mit dem das obere Ende des biegsamen Bandes (4) durch Einschnappen dieses Endes am beweglichen Teil (1) befestigt werden kann.

7. Vorrichtung nach einem der vorangehenden Ansprüche, **dadurch gekennzeichnet, dass** die Tragplatte (8) Mittel zum Positionieren und Befestigen am Träger (3) enthält, die insbesondere aus einem oder mehreren Positionierstegen (19) und aus einem oder mehreren Befestigungszapfen (21) bestehen, die in Öffnungen entsprechender Form des Trägers (3) eindrückbar sind.

8. Vorrichtung nach einem der vorangehenden Ansprüche, **dadurch gekennzeichnet, dass** die Tragplatte (8) zumindest einen elektrischen Verbinder enthält, der an dieser befestigt ist und den Anschluß der Leiterdrähte des Bündels (2) ermöglicht.

9. Vorrichtung nach einem der vorangehenden Ansprüche, **dadurch gekennzeichnet, dass** sie Abstandshalter enthält, die an der Tragplatte (8) vorgesehen sind, mit denen ein Raum zwischen Tragplatte (8) und Träger (3) gebildet werden kann, um in diesem einen oder mehrere elektrische Verbinder aufzunehmen, die unter der Tragplatte (8) befestigt sind und den Anschluss der Leiterdrähte eines elektrischen Bündels gestatten, das zur Versorgungsquelle führt.

## Claims

1. A device for supporting and guiding a deformable bundle of electrically conductive wires (2) enabling the connection of a battery of a motor vehicle to equipment which is fed by said battery and is to be firmly attached to a part, which is the bottom of the front seat in a motor vehicle, said part being movable relative to a support (3), which is the floor of the vehicle, the device for supporting comprising a flexible curved band (4) which is in the shape of a channel for housing the bundle of wires and is located underneath the movable part (1) in an approximately vertical plane relative to the support (3) and which has its lower end firmly attached to a plate (8) capable of being fixed to the support (3), its upper end having means (7) enabling it to be fixed to the movable part (1), and comprising fixing means (17) enabling the bundle (2) to be held securely in the channel in close contact with the inside face of the flexible curved band (4), so as to allow the bundle (2) to follow the deformations of the flexible curved band (4) resulting from the movements of the movable part (1) at least in two orthogonal directions respectively perpendicular to the support (3) and parallel to it, the flexible curved band (4) comprising a plurality of elements (5) linked to one another by transverse zones of reduced thickness (6) constituting film hinges, **characterized in that** the channel has its side walls defined by small transverse plates (16) respectively disposed at the edges of the flexible band (4) extending at regular intervals along the two edges of the flexible band (4) and projecting radially towards the inside of said band.

2. A device according to Claim 1, **characterized in that** the flexible curved band (4) is made of a supple plastic material, such as polypropylene.

3. A device according to one of the preceding claims, **characterized in that** the fixing means (17) comprise fasteners in the form of clamps which are hinged at regular intervals on to one of the walls of the channel of the flexible band (4) and are secured by clipping their free ends over the other side wall of the flexible band (4).

4. A device according to one of the preceding claims, **characterized in that** it includes fixing means (10) enabling the end portion of the bungle (2), located close to the junction zone (9) between the flexible band (4) and the plate (8), to be fixed to said plate (8).

5. A device according to Claim 4, **characterized in that** said fixing means (10) comprise a clamp collar.

6. A device according to one of the preceding claims, **characterized in that** said means (7) comprise at least one hook or clip enabling the upper end of the flexible band (4) to be secured by clipping of this end on to the movable part (1).

7. A device according to one of the preceding claims, **characterized in that** the plate (8) comprises means for positioning and fixing it on to the support (3), said means specifically comprising one or more positioning bars (19) and one or more fixing stud-bolts (21) capable of forcibly engaging in openings of conjugate shape made in the support (3).

8. A device according to one of the preceding claims, **characterized in that** the plate (8) has at least one electrical connector fixed to it for connecting-up of the conductive wires of the bundle (2).

9. A device according to one of the preceding claims, **characterized in that** it includes spacing means provided on the plate (8), enabling a space to be formed between the plate (8) and the support (3) for receiving in said space one or more electrical connectors fixed underneath the plate (8) for connecting-up of the conductive wires of an electrical bundle leading to the power supply.
